(19) Europäisches Patentamt
European Patent Office
Office européen des brevets

(11) Veröffentlichungsnummer: **0 120 296**
**B1**

(12) # EUROPÄISCHE PATENTSCHRIFT

(45) Veröffentlichungstag der Patentschrift: **04.06.86**

(51) Int. Cl.⁴: **C 08 L 81/06**, C 08 L 71/04, C 08 K 5/18

(21) Anmeldenummer: **84101878.1**

(22) Anmeldetag: **23.02.84**

(54) **Schwerentflammbare, transparente Poly-(arylether-arylsulfon)-Formmassen, Verfahren zu deren Herstellung sowie deren Verwendung.**

(30) Priorität: **01.03.83 DE 3307051**

(43) Veröffentlichungstag der Anmeldung: **03.10.84 Patentblatt 84/40**

(45) Bekanntmachung des Hinweises auf die Patenterteilung: **04.06.86 Patentblatt 86/23**

(84) Benannte Vertragsstaaten: **BE DE FR GB NL**

(56) Entgegenhaltungen:
**FR - A - 1 545 335**
**US - A - 3 417 142**
**US - A - 4 049 627**

**Chemical Abstracts Band 84, Nr. 6, 9. Februar 1976, Columbus, Ohio, USA Seite 35, Spalte 2, Abstract Nr. 31964f**
**Chemical Abstracts Band 92, Nr. 8, 25. Februar 1980, Columbus, Ohio, USA P.H. BURLEIGH et al. "A new flame retardant for engineering thermoplastics", Seite 20, Spalte 2, Abstract Nr. 59503u**

(73) Patentinhaber: **BASF Aktiengesellschaft, Carl-Bosch-Strasse 38, D-6700 Ludwigshafen (DE)**

(72) Erfinder: **Blinne, Gerd, Dr., Im Woogtal 7, D-6719 Bobenheim (DE)**
Erfinder: **Muench, Volker, Dr., Luitpoldstrasse 114, D-6700 Ludwigshafen (DE)**

**EP 0 120 296 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Aromatische Polysulfone sind Gegenstand zahlreicher Publikationen, Patente und Patentanmeldungen. Beispielhaft genannt seien die Publikationen im Journal of Chemical Society (1961), Seiten 1604 bis 1610, und Journal of Polymer Science (1959), 40, Seiten 399 bis 406, sowie die DE-A-1 545 106 (GB-A-1 078 234), DE-A-15 20 131 (GB-A-1 016 245) und DE-A-15 20 379 (GB-A-1 060 546).

Poly-(arylether-arylsulfone) mit Einheiten der Formel

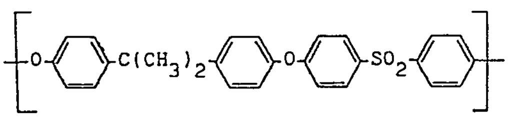

sind Werkstoffe von grossem technischen Nutzen. Für viele Anwendungsgebiete ist jedoch neben der hohen Temperaturbeständigkeit auch eine gute Flammbeständigkeit von erheblicher Bedeutung.

Es wurde bereits eine Vielzahl von Massnahmen beschrieben, Kunststoffe z.B. auch Polyarylsulfone, durch geeignete Zusatzstoffe schwerentflammbar zu machen. Nach Angaben der DE-A-29 03 100 (GB-A-20 39 503) führt der Zusatz von organischen Sulfonaten zu selbstverlöschenden Poly-(arylether-arylsulfonen). Mit Hilfe von bromierten aromatischen Ethern, wie z.B. 1,2-Bis-(2,4,6-tribromphenoxy)-ethan, 1,3-Bis-(2,4,6-tribromphenoxy)-propan oder 1,2-Bis-(2,3,4,5,6-pentabromphenoxy)-ethan und Oxiden des Antimons, Arsens oder Wismuths können gemäss US-A-4 049 619 schwerentflammbare Poly-(arylether-arylsulfone) hergestellt werden.

Nachteilig an den beispielhaft genannten Verfahren und den bisher bekannten schwerentflammbaren Poly-(arylether-arylsulfone) ist jedoch der Verlust der Transparenz der Formmassen durch Zugabe der Flammschutzmittel, ihre starke Neigung zur Zersetzung und ihre Flüchtigkeit bei den hohen Verarbeitungstemperaturen. Die beiden letztgenannten nachteiligen Eigenschaften verursachen eine schlechtere Flammfestigkeit und unerwünschte Verfärbungen.

Die Aufgabe der vorliegenden Erfindung bestand darin, schwerentflammbare Poly-(arylether-arylsulfon)-Formmassen zu entwickeln, ohne die gute Transparenz der unmodifizierten Formmassen durch die Zusatzstoffe zu beeinträchtigen.

Diese Aufgabe konnte überraschenderweise gelöst werden durch die Verwendung von Poly-(2,6-dibromphenylen-1,4-oxiden) als Flammschutzmittel, gegebenenfalls in Kombination mit Wärmestabilisatoren.

Gegenstand der Erfindung sind somit schwerentflammbare, transparente Poly-(arylether-arylsulfon)-Formmassen, die dadurch gekennzeichnet sind, dass sie als Flammschutzmittel Poly-(2,6-dibromphenylen-1,4-oxide) enthalten.

Die erfindungsgemäss verwendbaren Poly-(2,6-dibromphenylen-1,4-oxide) besitzen Molekulargewichte von 1000 bis 20 000, vorzugsweise von 2000 bis 6000, und werden hergestellt durch Polykondensation von 2,4,6-Tribromphenol in Gegenwart von Alkalihydroxiden, wie z.B. Natriumhydroxid, nach bekannten Verfahren, beispielsweise nach DE-A-2 948 263, DE-A-3 002 658, S. Yoshiba und H. Kawahara in American Chemical Society, Division of Polymer Chemistry, Polymer Preprints, Band 20, Heft 1, Seiten 861 bis 862 (1979) oder J.F. Harrod, P. van Gheluwe, D. Kisakurek und A. Shaver in Macromolecules, Band 14, Seiten 565 bis 570 (1981).

Je nach Art der Poly-(arylether-arylsulfone) und der gegebenenfalls in den Formmassen enthaltenen Zusatz- und Hilfsmitteln, werden die Poly-(2,6-dibromphenylen-1,4-oxide) in Mengen von 0,1 bis 10,0 Gew.%, vorzugsweise von 0,5 bis 3,0 Gew.%, bezogen auf das Gewicht der Poly-(arylether-arylsulfone) verwendet, wobei sich bei reinen Poly-(arylether-arylsulfonen) Mengen von 0,1 bis 3,0 Gew.% des erfindungsgemässen Flammschutzmittels insbesondere bewährt haben.

Nach einer bevorzugt Ausführungsform werden den schwerentflammbaren, transparenten Poly-(arylether-arylsulfon)-Formmassen zusätzlich zu den Poly-(2,6-dibromphenylen-1,4-oxiden) üblich Wärmestabilisatoren in einer Menge von 0,1 bis 5,0 Gew.%, vorzugsweise von 0,3 bis 3 Gew.%, bezogen auf das Gewicht der Poly-(arylether-arylsulfone), einverleibt.

Als Wärmestabilisatoren finden vorzugsweise sterisch gehinderte Phenole, wie sie beispielsweise unter dem Warenzeichen ®Irganox der Firma Ciba Geigy feilgehalten werden und insbesondere cyclische und/oder lineare Diphenylamin-Aceton-Kondensate mit Molekulargewichten von 227 bis 624 Verwendung.

Geeignete Diphenylamin-Aceton-Kondensate können hergestellt werden durch Kondensation von Diphenylamin und Aceton im Molverhältnis von 1:1 bis 2:1, vorzugsweise 1 bis 1,5:1 nach bekannten, z.B. in den US-A-1 906 935, US-A-1 975 167 und US-A-2 002 642, beschriebenen Verfahren.

Zur Kondensation mit Aceton können zusätzlich zu Diphenylamin noch unsubstituierte oder substituierte, z.B. mit linearen oder verzweigten Alkylgruppen mit 1 bis 4 Kohlenstoffatomen substituierte Aromaten im Molverhältnis von Diphenylamin zu Aromaten von 1:2 bis 2:1, vorzugsweise 1:2, eingesetzt werden. Beispielhaft genannt seien Ethyl-, n- und iso-Propyl-, n- und sec.-Butylbenzol und vorzugsweise Toluol und Benzol sowie Aromatengemische.

Als cyclische oder lineare Diphenylamin-Aceton-Kondensate kommen beispielsweise Verbindungen in Betracht mit folgenden allgemeinen Formeln

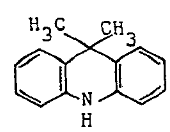 ,

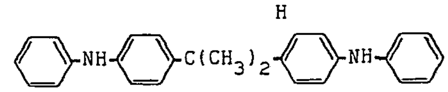

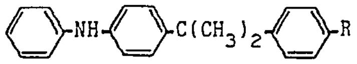

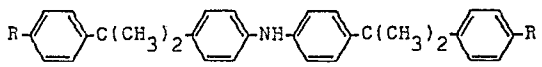 ,

in denen R gleich oder verschieden ist und vorzugsweise einen Alkylrest mit 1 bis 4 Kohlenstoffatomen und insbesondere eine Methylgruppe und/oder ein Wasserstoffatom bedeutet. Besonders bewährt haben sich und daher vorzugsweise verwendet werden

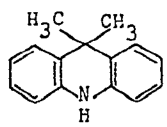 oder

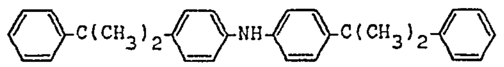 ,

Die sterich gehinderten Phenole und die cyclischen oder linearen Diphenylamin-Aceton-Kondensate mit Molekulargewichten von 227 bis 624 können einzeln oder als Gemische sowie als technische Mischungen eingesetzt werden.

Besonders bewährt haben sich und daher vorzugsweise verwendet werden Poly-(arylether-arylsulfon)-Formmassen, die 0,1 bis 10 Gew.%, vorzugsweise 0,1 bis 3 Gew.%, Poly-(2,6-dibromphenylen-1,4-oxide) und 0,1 bis 5 Gew.%, vorzugsweise 0,3 bis 3,0 Gew.%.

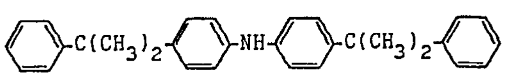

und/oder 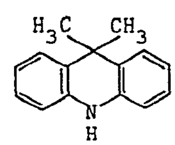

enthalten, wobei die Gew.% bezogen sind auf das Poly-(arylether-arylsulfon)-Gewicht.

Die Transparenz der Formmassen wird durch die einverleibten Mengen an erfindungsgemässem Flammschutzmittel und Wärmestabilisator praktisch nicht negativ beeinflusst.

Die erfindungsgemäss verwendbaren Poly(2,6-dibromphenylen-1,4-oxide) eignen sich zum schwerentflammbar Machen von aromatischen Polysulfonen, die wiederkehrende Einheiten der Formel

$$-Ar-SO_2-$$

besitzen, in der Ar ein zweiwertiger aromatischer Rest ist. Zur Herstellung der schwerentflammbaren, transparenten Formmassen werden insbesondere Poly-(arylether-arylsulfone) verwendet, die im wesentlichen aus Einheiten der Formel

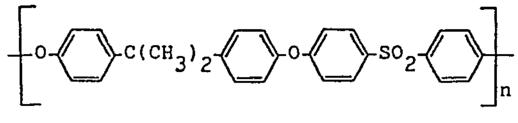

bestehen, in der n eine ganze Zahl von 30 bis 100, vorzugsweise von 40 bis 80, bedeutet. Aufgrund der grossen Variabilität der mechanischen Eigenschaften haben sich jedoch auch aromatische Polysulfone bewährt, so dass diese ebenfalls bevorzugt sind, die zu mindestens 50 Gew.%, bezogen auf das Gesamtgewicht der aromatischen Polysulfone, aus Einheiten der Formel

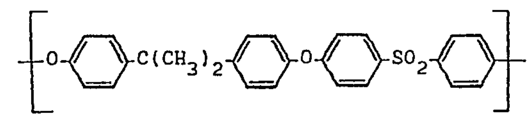

bestehen und zusätzlich noch kondensierte Einheiten von Comonomeren enthalten. Geeignete Comonomere ergeben kondensiert beispielsweise Einheiten mit Strukturen der Formel

$$-Ar^1-(Y)_m-Ar^2-Z$$

in der bedeuten:

$Ar^1$, $Ar^2$ einen gebenenfalls substituierten aromatischen Rest, der gleich oder verschieden sein kann,

Y eine $-SO_2-$, $-S-$, $-S-S-$, $-CO-$, $C_1$-$C_{12}$-Alkylen, $C_2$-$C_{12}$-Alkyliden, $C_5$-$C_{12}$-Cycloalkylen oder $C_7$-$C_{12}$-Arylalkylen-Gruppe,

m 0 oder 1, und

Z eine $-O-$, oder $-S$-Gruppe.

Derartige aromatische Polysulfone besitzen Molekulargewichte von 15000 bis 50000, vorzugsweise von 20000 bis 40000, und Inherent-Viskositäten (gemessen bei 20°C in 1 Gew.%iger n-Methylpyrrolidon-Lösung) von 0,35 bis 0,85, vorzugsweise von 0,40 bis 0,70.

Die erfindungsgemässen Poly-(arylether-polysulfon)-Formmassen werden vorteilhafterweise hergestellt durch Mischen der geschmolzenen Poly-(arylether-arylsulfone), die, wie bereits dargelegt, vorzugsweise zu mindestens 50 Gew.% Einheiten der Formel

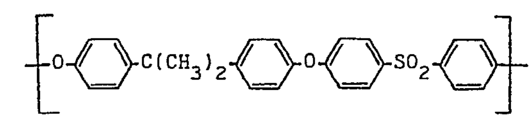

enthalten, mit den Poly-(2,6-dibromphenylen-1,4-oxiden) und gegebenenfalls Wärmestabilisatoren, beispielsweise mit Hilfe eines Kneters, Intensivmischers, Stator-Rotormischers, einer Walzenmühle und vorzugsweise eines Extruders bei Temperaturen von 280 bis 380° C, vorzugsweise von 300 bis 360° C. Nach einer anderen Verfahrensvariante können die gepulverten oder granulierten Poly-(arylether-arylsulfon) auch mit dem Flammschutzmittel und gegebenenfalls Wärmestabilisatoren gepudert oder mit Lösungen der genannten Flammschutzmittel und gegebenenfalls Wärmestabilisatoren behandelt und danach die Formmasse getrocknet werden.

Sofern die Transparenz für die Verwendung der Werkstoffe von untergeordneter Bedeutung oder keine Transparenz erforderlich ist, können die erfindungsgemässen Poly-(arylether-arylsulfon)-Formmassen mit anderen Thermoplasten, beispielsweise Polyestern, Polyamiden, Polyurethanen, Polyolefinen, Polyvinylchlorid und Polyoxymethylenen in Mengen von 5 bis 50 Gew.%, vorzugsweise 20 bis 50 Gew.%, bezogen auf die Poly-(arylether-arylsulfone) gemischt werden. Sie können ausserdem mit verstärkend wirkenden Füllstoffen, gegebenenfalls transparenten Pigmenten und anderen Hilfs- und Zusatzstoffen modifiziert werden.

Als verstärkend wirkende Füllstoffe seien beispielsweise Asbest, Kohle und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20µm, vorzugsweise 8 bis 15 µm zur Anwendung gelangen, die nach ihrer Einarbeitung eine mittlere Länge von 0,05 bis 1 mm, vorzugsweise 0,1 bis 0,5 mm, aufweisen. Die mit Glasseidenrovings oder geschnittener Glasseide verstärkten Poly-(arylether-arylsulfon)-Formmassen enthalten zwischen 10 und 60 Gew.%, vorzugsweise 20 bis 50 Gew.%, des Verstärkungsmittels, bezogen auf das Gesamtgewicht, während die imprägnierten Glasgewebe, -matten und/oder -vliese zwischen 10 und 80 Gew.%, vorzugsweise zwischen 30 und 60 Gew.% Poly-(arylether-arylsulfone), bezogen auf das Gesamtgewicht, enthalten. Als Pigmente eignen sich beispielsweise Titandioxid, Cadmium-, Zinksulfid, Bariumsulfat und Russ. Als andere Zusatz- und Hilfsstoffe kommen beispielsweise in Betracht Farbstoffe, Schmiermittel, wie z.B. Graphit oder Molybdändisulfid, Schleifmittel, wie z.B. Carborund, Lichtstabilisatoren und Hydrolyseschutzmittel. Die Pigmente, Zusatz- und Hilfsstoffe werden üblicherweise in mengen von 0,01 bis 3 Gew.%, bezogen auf das Gewicht an Poly-(arylether-arylsulfonen), eingesetzt.

Die erfindungsgemässen Poly-(arylether-arylsulfon)-Formmassen werden verwendet zum Herstellen von Formteilen, Folien und Fasern.

Die Erfindung wird durch die nachfolgenden Beispiele und Vergleichsbeispiele näher erläutert. Die genannten Teile und Prozente beziehen sich auf das Gewicht. Die Flammschutzprüfung wurde im vertikalen Brandtest nach den Vorschriften der Underwriter Laboratories zur Einordnung in eine der Brandklassen 94 VE-0, 94 VE-1 oder 94 VE-2, publiziert in J. Troitzsch, Brandverhalten von Kunststoffen, Hanser-Verlag, München, Wien, 1981, Seiten 397 bis 399, durchgeführt. Als Prüfkörper wurden 1/8" Prüfstäbe benutzt.

*Beispiele und Vergleichsbeispiele*

Allgemeine Verfahrensvorschrift

Die in der nachfolgenden Tabelle genannten Flammschutzmittel und gegebenenfalls Wärmestabilisatoren wurden mit einem Poly-(arylether-arlysulfon), das im wesentlichen aus wiederkehrenden Einheiten der Formel

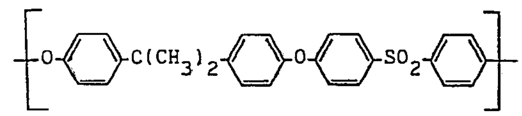

bestand (®Udel P-1700 der Union Carbide Corp.) bei 330° C in einem Extruder zusammen aufgeschmolzen, homogenisiert und anschliessend granuliert. Aus den Granulaten wurden bei 330° C im Spritzguss Prüfkörper hergestellt, an denen die Transparenz, die Farbe und das Brandverhalten bestimmt wurden.

In der Tabelle wurden die Wärmestabilisatoren wie folgt bezeichnet:

445: 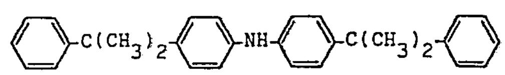

(®Naugard 445 die Firma Uniroyal)

1010: sterisch gehindertes Phenol
(®Irganox 1010 der Firma Ciba Geigy)

| Beispiele | Flammschutzmittel | | Wärme-stabilisator | | Farbe | Trans-parenz | UL*-94-test |
|---|---|---|---|---|---|---|---|
| | Art | Menge (%) | Art | Menge (%) | | | |
| 1 | Poly-(2,6-dibromphenylen-1,4-oxid) (Molekulargewicht 5000) | 0,2 | — | — | sehr hell | sehr gut | VE-1 |
| 2 | » | 0,5 | — | — | sehr hell | sehr gut | VE-1 |
| 3 | » | 1,0 | — | — | hell | sehr gut | VE-0 |
| 4 | » | 3,0 | — | — | hell | sehr gut | VE-0 |
| 5 | » | 0,5 | 445 | 0,5 | hell | sehr gut | VE-0 |
| 6 | » | 0,5 | 1010 | 0,5 | sehr hell | sehr gut | VE-0 |
| Vergleichs-beispiele | | | | | | | |
| 1 | — | — | — | — | sehr hell | sehr gut | VE-2 |
| 2 | $-SO_3Na$ | 1,0 | — | — | beige | keine | VE-0 |
| 3 | Antimontrioxid | 3,0 | — | — | beige | keine | VE-0 |
| 4 | Decabromdiphenylether | 3,0 | — | — | braun | gut | VE-2 |

* Underwriter Laboratories

Die Beispiele und Vergleichsbeispiele zeigten, dass nur die erfindungsgemässen Poly-(2,6-dibromphenylen-1,4-oxide) mit einem Molekulargewicht von ungefähr 2000 bis 6000 als Flammschutzmittel enthaltende Poly-(arylether-arylsulfon)-Formmassen schwerentflammbar und gleichzeitig transparent waren und eine helle Farbe aufwiesen.

## Patentansprüche

1. Schwerentflammbare, transparente Poly-(arylether-arylsulfon)-Formmassen, dadurch gekennzeichnet, dass sie als Flammschutzmittel Poly-(2,6-dibromphenylen-1,4-oxide) mit Molekulargewichten von 1000 bis 20000 in Mengen von 0,1 bis 10,0 Gew.%, bezogen auf das Gewicht an Poly-(arylether-arylsulfone), enthalten.

2. Schwerentflammbare, transparente Poly-(arylether-arylsulfon)-Formmassen nach Anspruch 1, dadurch gekennzeichnet, dass sie Poly-(2,6-dibromphenylen-1,4-oxide) und zusätzlich einen Wärmestabilisator enthalten.

3. Schwerentflammbare, transparente Poly-(arylether-arylsulfon)-Formmassen nach Anspruch 1, dadurch gekennzeichnet, dass sie Poly-(2,6-dibromphenylen-1,4-oxide) und zusätzlich einen Wärmestabilisator aus der Gruppe der cyclischen und/oder linearen Diphenylamin-Aceton-Kondensate mit Molekulargewichten von 227 bis 624 in einer Menge von 0,1 bis 5,0 Gew.%, bezogen auf das Gewicht an Poly-(arylether-arylsulfone), enthalten.

4. Schwerentflammbare, transparente Poly-(arylether-arylsulfon)-Formmassen nach Anspruch 1, dadurch gekennzeichnet, dass sie 0,1 bis 10,0 Gew.% Poly-(2,6-dibromphenylen-1,4-oxide) und 0,1 bis 5,0 Gew.%

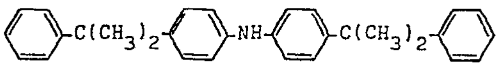

und/oder

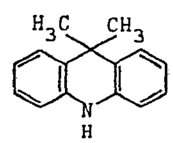

enthalten, wobei die Gew.%e bezogen sind auf das Poly-(arylether-arylsulfon)-Gewicht.

5. Schwerentflammbare, transparente Poly-(arylether-arylsulfon)-Formmassen nach Anspruch 1, dadurch gekennzeichnet, dass die Poly-(arylether-arylsulfone) zu mindestens 50 Gew.% Einheiten der Formel

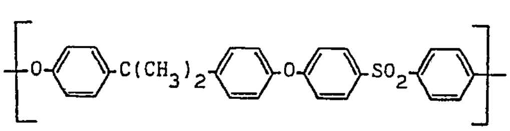

enthalten.

6. Schwerentflammbare, transparente Poly-(arylether-arylsulfon)-Formmassen nach Anspruch 1, dadurch gekennzeichnet, dass die Poly-(arylether-arylsulfone) im wesentlichen bestehen aus Einheiten der Formel

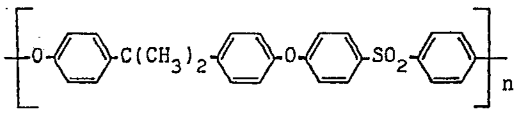

in der n eine ganze Zahl von 30 bis 100 bedeutet.

7. Verfahren zur Herstellung von schwerentflammbaren, transparenten Poly-(arylether-arylsulfon)-Formmassen gemäss Anspruch 1, dadurch gekennzeichnet, dass man Poly-(arylether-arylsulfone), die vorzugsweise mindestens 50 Gew.% Einheiten der Formel

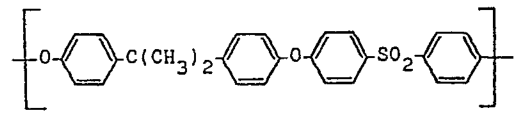

enthalten, in der Schmelze mit Poly-(2,6-dibromphenylen-1,4-oxid) und gegebenenfalls Wärmestabilisatoren mischt.

8. Verwendung der schwerentflammbaren, transparenten Poly-(arylether-arylsulfon)-Formmassen nach Anspruch 1 zum Herstellen von Formteilen, Folien oder Fasern.

## Revendications

1. Matières de moulage de poly-(aryléther-arylsulfone) transparentes, difficilement inflammables, caractérisées par le fait qu'elles contiennent, comme agents retardant les flammes, des poly-(2,6 dibromo-phénylène-1,4-oxydes) de poids moléculaires de 1000 à 20000, en proportions de 0,1 à 10% en poids, rapportées au poids de poly-(aryléther-arylsulfones).

2. Matières de moulage de poly-(aryléther-arylsulfone) transparentes, difficilement inflammables selon la revendication 1, caractérisées par le fait qu'elles contiennent des poly-(2,6-dibromophénylène-1,4-oxydes) et, en plus, un stabilisateur de chaleur.

3. Matières de moulage de poly-(aryléther-arylsulfone) transparentes, difficilement inflammables selon la revendication 1, caractérisées par le fait qu'elles contiennent des poly-(2,6-dibromophénylène-1,4 oxydes) et, en plus, un stabilisateur de chaleur appartenant au groupe des condensats de diphénylamine-acétone cycliques et/ou linéaires, de poids moléculaires de 227 à 624 en proportion de 0,1 à 5,0% en poids, rapportées au poids des poly-(aryléther-arylsulfones).

4. Matières de moulage de poly-(aryléther-arylsulfone) transparentes, difficilement inflammables selon la revendication 1, caractérisées par le fait qu'elles contiennent 0,1 à 10,0% en poids de poly-(2,6-dibromophénylène-1,4 oxydes) et 0,1 à 5,0% en poids

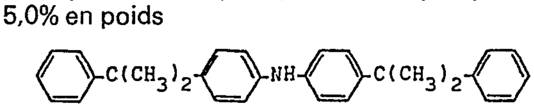

et/ou

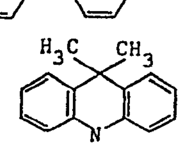

les pourcentages en poids étant rapportés au poids de la poly-(aryléther-arylsulfone).

5. Matières de moulage de poly-(aryléther-arylsulfone) transparentes, difficilement inflammables selon la revendication 1, caractérisées par le fait que les poly-(aryléther-arylsulfones) contiennent jusqu'au moins 50% en poids de motifs de formule

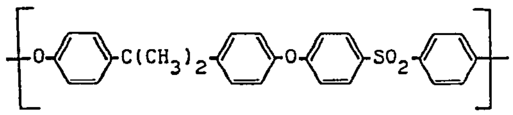

6. Matières de moulage de poly-(aryléther-arylsulfone) transparentes, difficilement inflammables selon la revendication 1, caractérisées par le fait que les poly-(aryléther-arylsulfones) sont constituées essentiellement de motifs de formule

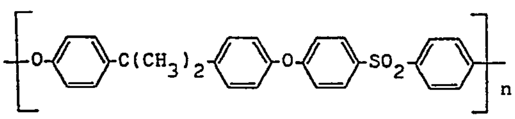

dans laquelle n est un nombre entier de 30 à 100.

7. Procédé de préparation de matières de moulage de poly-(aryléther-arylsulfone) transparentes, difficilement inflammables selon la revendication 1, caractérisé par le fait qu'on mélange, à l'état fondu, des poly-(aryléther-arylsulfones) qui contiennent, avantageusement, au moins 50% en poids de motifs de formule

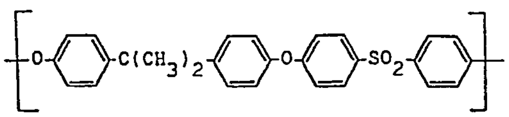

avec du poly-(2,6-dibromophénylène-1,4 oxyde) et éventuellement des stabilisateurs de chaleur.

8. Utilisation des matières de moulage de poly-(aryléther-arylsulfone) transparentes, difficilement inflammables selon la revendication 1, pour préparer des pièces moulées, des feuilles ou des fibres.

## Claims

1. A transparent flame-retardant poly(arylether-arylsulfone) molding material which contains, as flameproofing agent, a poly(2,6-dibromophenylene 1,4-oxide) having a molecular weight of from 1000 to 20,000 in an amount of from 0.1 to 10.0% by weight, based on the weight of poly-(arylether-arylsulfone).

2. A transparent flame-retardant poly(arylether-arylsulfone) molding material as claimed in claim 1, which contains a poly(2,6-dibromophenylene 1,4-oxide) and, in addition, a heat stabilizer.

3. A transparent flame-retardant poly(arylether-arylsulfone) molding material as claimed in claim 1, which contains a poly(2,6-dibromophenylene 1,4-oxide) and, in addition, from 0.1 to 5.0% by weight, based on the weight of poly-(arylether-arylsulfone), of a heat stabilizer selected from the group consisting of cyclic and/or linear diphenylamine/acetone condensates having molecular weights of from 227 to 624.

4. A transparent flame-retardant poly(arylether-arylsulfone) molding material as claimed in claim 1, which contains from 0.1 to 10.0% by weight of a poly(2,6-dibromophenylene 1,4-oxide), and
from 0.1 to 5.0% by weight of

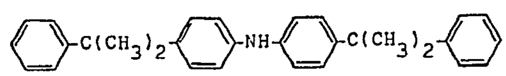

and/or

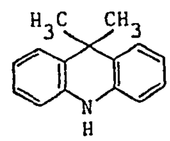

the percentages by weight being based on the weight of the poly(arylether-arylsulfone).

5. A transparent flame-retardant poly(arylether-arylsulfone) molding material as claimed in claim 1, wherein the poly(arylether-arylsulfone) contains at least 50% by weight of units of the formula

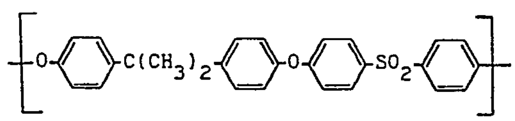

6. A transparent flame-retardant poly(arylether-arylsulfone) molding material as claimed in claim 1, wherein the poly(arylether-arylsulfone) consists essentially of units of the formula

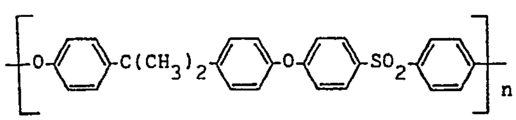

where n is an integer from 30 to 100.

7. A process for the preparation of a transparent flame-retardant poly(arylether-arylsulfone) molding material as claimed in claim 1, wherein a poly-(arylether-arylsulfone) which preferably contains at least 50% by weight of units of the formula

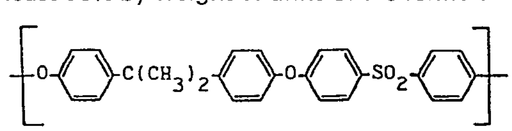

is mixed, in the melt, with poly(2,6-dibromophenylene 1,4-oxide) and, if desired, a heat stabilizer.

8. The use of a transparent flame-retardant poly(arylether-arylsulfone) molding material as claimed in claim 1 for the production of molded parts, film and sheeting, or fibers.